# EUROPEAN PATENT SPECIFICATION

(11) **EP 4 610 576 B1**
(45) Date of publication and mention of the grant of the patent: **02.09.2026**
(21) Application number: 25159133.5
(22) Date of filing: 20.02.2025
(51) Int. Cl.: F24F 11/38, F24F 11/63, F24F 11/64, F24F 11/67, G05D 23/19

(54) **CONTROL SYSTEM AND METHOD FOR A PLURALITY OF THERMOSTATS**
STEUERUNGSSYSTEM UND -VERFAHREN FÜR EINE VIELZAHL VON THERMOSTATEN
SYSTÈME ET PROCÉDÉ DE COMMANDE POUR UNE PLURALITÉ DE THERMOSTATS

(30) Priority: 28.02.2024 IT 202400004372
(43) Date of publication of application: 03.09.2025
(73) Proprietor: INTEREL PTE LTD, Singapore 049910 (SG)
(72) Inventor: GALLINI, Stefano Francesco Florian, 0000 Dubai (AE)
(74) Representative: Anselmi, Davide

(56) References cited:
- CN-A- 117 091 264
- US-A1- 2019 195 523
- US-A1- 2021 071 888

## Description

### Technical field

The present invention relates to a control system and a control method for a plurality of thermostats.

The present invention relates also to a computer program for controlling the plurality of thermostats.

Therefore, the present invention relates to the field of thermal control of an ambient, in particular to the conditioning of a plurality of rooms in an hotel or in a residential building.

### Prior art

As of today, a thermostat is connected to a conditioning system and is set to a specific operating mode in order to control the conditioning system to low or rise a temperature of a room.

However, if the operating mode of a thermostat is different from the operating mode of a conditioning system, setting the temperature of a room will lead to a different outcome from the one desired.

For example, if the conditioning system is working on a winter mode (the system is heating up the water in the pipes) and the thermostat is set on a summer mode, an increase of temperature in the room will result in a call from the thermostat to the conditioning system in order to try to lower the temperature in the room (because the thermostat is set on a summer mode). However, the conditioning system (set on a winter mode) will feed hot water in the tubes determining a further increase in the temperature of the room. The same situation occurs in the opposite configuration of thermostat and conditioning system (thermostat set on winter mode and conditioning system set on summer mode).

So, whenever a season changeover happens, all the thermostats should be set to the right operating mode. As of today, when the season changeover happens, and the conditioning system is set to a specific operating mode, all the thermostats are set manually to the right operating mode with the possibility that, due to human error, some thermostats were leaved in the wrong operating mode. Furthermore, in some cases, the thermostats will be leaved in the wrong operating mode, leaving the guests or the staff the task to change the operating mode. This solution could lead to some annoyance for a tired guest that, not knowing if the right operating mode is set, will set a temperature and see himself staying in a room with the wrong desired temperature.

Some thermostats are connected to the conditioning systems with specific dedicated sensors that will detect the temperature in the pipes of the conditioning system. However, if the thermostat is not provided with such sensors it will be difficult to add them in the system.

Furthermore, such sensors not always will allow for a fast retrofit in order to control the temperature in the room.

Further examples of prior art are disclosed in US2019/195523, CN117091264, US2021/071888.

### Scope of the present invention

The technical purpose of the invention is therefore to provide a control system, a control method and a computer program which are able to overcome the drawbacks of the prior art.

The aim of the present invention is therefore to provide a control system, a control method and a computer program which allow to reduce the human intervention and the human error in the mode switching of thermostats.

The technical purpose and aim specified are substantially achieved by a control system, a control method and a computer program comprising the technical features described in one or more of the attached claims. The dependent claims correspond to possible embodiments of the invention.

In particular, the technical purpose indicated and the aim specified are substantially achieved by a control system for a plurality of thermostats comprising a plurality of thermostats in use connected with a conditioning system.

According to an aspect of the present invention, each thermostat is set to an operating mode, selected between a cooling mode and a heating mode, and is configured to measure an ambient temperature and to set a desired temperature.

The control system comprises a mode switcher, in use connected to the conditioning system, configured to set a season changeover for the conditioning system. The season changeover is selected between a cooling mode and a heating mode for the conditioning system.

The control system comprises a controller connected to the plurality of thermostats and being configured to obtain the ambient temperature and the desired temperature from at least one thermostat, preferably from a plurality of thermostats, identifying a discrepancy between the ambient temperature and the desired temperature during the functioning of the conditioning system, detecting the season changeover of the mode switcher in light of the discrepancy and switching the operating mode of each thermostats in order to match the season changeover of said mode switcher.

Furthermore, the technical purpose indicated and the aim specified are substantially achieved by a control method for a plurality of thermostats comprising the steps of define a desired temperature, activating a conditioning system in light of the desired temperature, measure an ambient temperature, confront the ambient temperature with the desired temperature, identifying a discrepancy between the ambient temperature and the desired temperature during the functioning of the conditioning system, detecting a season changeover of a mode switcher in light of the discrepancy, verifying if a discrepancy "C" derives from an incorrect operating mode or from a ambient event (for example window/door open), and switching an operating mode of each thermostats in order to match the season changeover of the mode switcher.

Preferably, the method is executed with the control system of the present invention.

Furthermore, the technical purpose indicated and the aim specified are substantially achieved by a computer program comprising instructions which, when the program is executed by a controller of the control system according to present invention, cause the controller to carry out the steps of the control method of the present invention.

In one embodiment the computer program is stored at least in the processing unit (or the controller).

In one embodiment, the computer program is stored remotely. In this embodiment it is a "SAAS (Software As A Service)" computer program, i.e. configured to be implemented only in the presence of an internet connection.

Further features and advantages of the invention will be more apparent in the non-limiting description which follows of a non-exclusive embodiment of a control system, a control method and a computer program.

### Brief description of the drawings

The description is set out below with reference to the accompanying drawing which are provided solely for purposes of illustration without restricting the scope of the invention and in which:

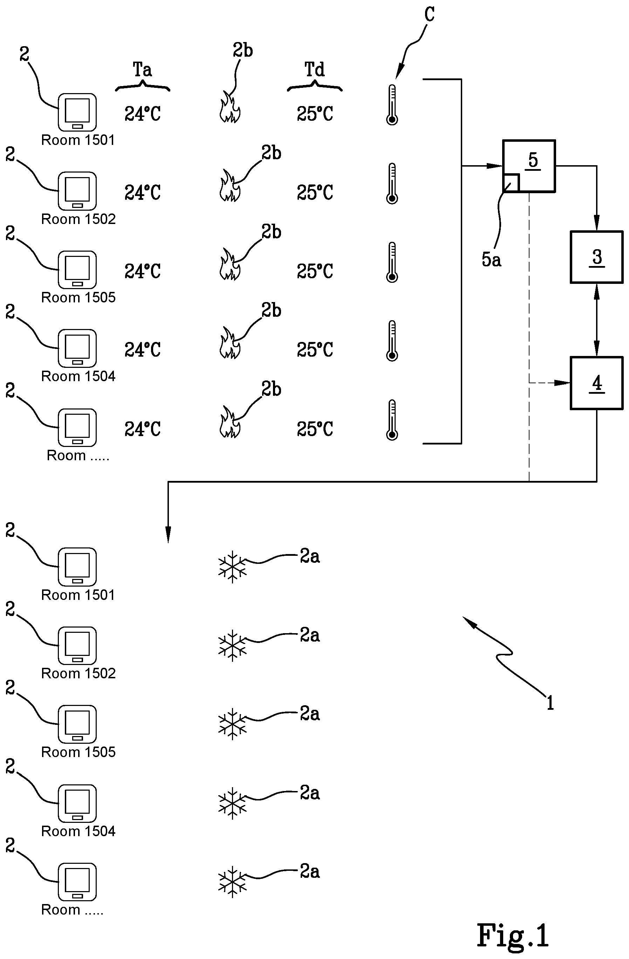

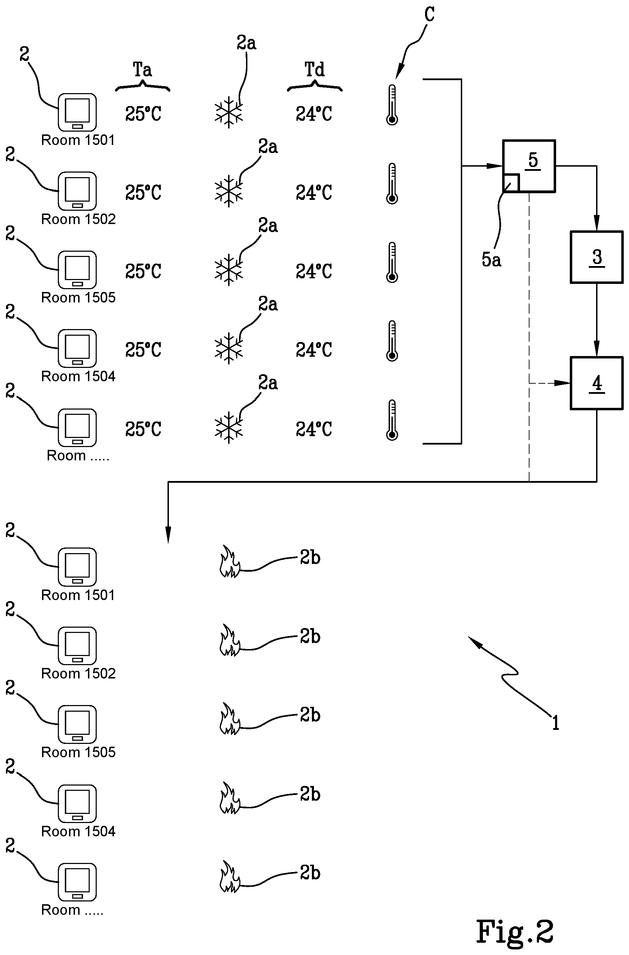

- Figures 1 and 2 are schematic representations of the control system according to the present invention.

### Description of one or more preferred embodiments of the present invention

With reference to the attached drawings, reference number 1 denotes in its entirety a control system for a plurality of thermostats 2.

The control system 1 comprises a plurality of thermostats 2 in use connected to a conditioning system 3. Each thermostat 2 is installed in a room of an hotel or of a residential building. In the attached figure, there are represented, for simplicity, five rooms indicated as "room 1501", "room 1502", "room 1305", "room 1504" and "room ...".

Each thermostat 2 is set to an operating mode, selected between a cooling mode 2a and a heating mode 2b. The operating mode decides how each thermostat 2 communicates with the conditioning system 3 in order to heat or to cool the room.

In particular, each thermostat 2 is configured to measure an ambient temperature "Ta" and to set a desired temperature "Td".

In figure 1, as an example, there is a starting ambient temperature "Ta" which is 24°C and a desired temperature "Td" set at 25°C. In this example, the operating mode of each thermostat 2 is heating mode 2b.

In figure 2, there is a starting ambient temperature "Ta" which is 25°C and a desired temperature "Td" set at 24°C. In this example, the operating mode of each thermostat 2 is cooling mode 2a.

The control system 1 comprises also a mode switcher 4, in use connected to the conditioning system 3, configured to set a season changeover for the conditioning system 3. The season changeover is selected between a cooling mode and a heating mode for the conditioning system 3. The season changeover corresponds to the type of operating mode required during a specified season. For example, during winter it will be required a heating mode while in summer it will be required a cooling mode, in function of the geographical location.

The control system 1 comprises also a controller 5 connected to the plurality of thermostats 2. The controller 5 is also connected with the mode switcher 4.

The controller 5 is configured to obtain the ambient temperature "Ta" and the desired temperature "Td" from at least one thermostat 2. In other word, each thermostat 2 send a temperature signal to the controller 5 relating to the ambient temperature "Ta" and the desired temperature "Td".

The controller 5 is furthermore configured to identifying a discrepancy "C" between the ambient temperature "Ta" and the desired temperature "Td" during the functioning of the conditioning system 3. In other words, setting the desired temperature "Td" will send a control signal to the conditioning system 3 which will start to operate and the ambient temperature "Ta" will change.

However, in the example of figure 1, setting a higher desired temperature "Td" with respect with the starting ambient temperature "Ta" will lead to a decrease in temperature, meaning that the ambient temperature "Ta" is lowering while the thermostat 2 is set to a heating mode 2b. Therefore, the controller 5 will identifying this lowering in temperature, while the thermostat 2 is in the heating mode 2b, as a discrepancy "C".

Similarly, in the example of figure 2, setting a lower desired temperature "Td" with respect with the starting ambient temperature "Ta" will lead to a increase in temperature, meaning that the ambient temperature "Ta" is increasing while the thermostat 2 is set to a cooling mode 2b. Therefore, the controller 5 will identifying this increasing in temperature, while the thermostat 2 is in the cooling mode 2b, as a discrepancy "C".

At this point, the controller 5 is configured to detect the season changeover of the mode switcher 4 in light of the discrepancy "C". If the mode switcher 5 is set to a different operating mode than the one detected from the thermostat 2, the controller 5 is configured to switch the operating mode of each thermostat 2 in order to match the season changeover of the mode switcher 4.

In detail such a discrepancy "C" could be identified as follows by said controller 5 which is further configured to:
- calculate a first difference, in absolute value, between the desired temperature Td and the ambient temperature Ta1 measured in a first phase,
- calculate a second difference, in absolute value, between said desired temperature Td and an ambient temperature Ta2 measured in a second phase subsequent to the first phase and during the functioning of said conditioning system 3;
- if the second difference is major than the first difference, a discrepancy "C" is identified, because it means that the working of the conditioning system is leading the temperature inside the room away from the desired temperature Td;
- if the second difference is minor than the first difference, there is not a discrepancy "C", because it means that the working of the conditioning system is leading the temperature inside the room toward the desired temperature Td.

In figure 1, the controller 5 will change the heating mode 2b of the thermostats 2 into the cooling mode 2a.

In figure 2, the controller 5 will change the cooling mode 2a of the thermostats 2 into the heating mode 2b.

If the thermostats 2 has a heat/cool button, the corresponding heat/cool button would switch in order to change the operating mode.

It would be logical that, if a thermostat 2 is already in the correct operating mode, the controller 5 will no switch its operating mode.

In an embodiment of the present invention, the controller 5 is configured to verify that the discrepancy "C" is present in a pre-established number of thermostats 2. In other words, the controller 5 will select a sample of thermostats 2 in the plurality of thermostats 2 and verifying that all or at least the majority of the thermostats 2 selected send temperatures that would lead the controller 5 to recognize the discrepancy "C". If said pre-established number of thermostats 2 present said discrepancy "C", the controller 5 will check the operating mode of the mode switcher 4 and change the operating mode of the thermostats 2 if the operating mode doesn't check.

Preferably, the controller 5 is configured to identify the discrepancy "C" if the ambient temperature "Ta" (during the functioning of the conditioning system 3) is higher or lower than the desired temperature "Td" with a pre-established threshold. In other words, the controller 5 recognise the discrepancy "C" as defined before, only if the ambient temperature "Ta" measured during the functioning of the conditioning system 3 exceeds said threshold.

Preferably, the threshold could be comprised between 0,5 and 2°C.

Preferably, the control system 1 (or directly the controller 5) comprises a server 5a configured to define a discrepancy "C" history.

The controller 5 is connected to the server 5a in order to identify if a discrepancy "C" derives from an incorrect operating mode or from a ambient event. For ambient event it is intended whatever could happen in the rooms as, for example, an opening of a window or the introduction in the room of a cold or hot object. In particular, the controller 5 is configured for switching the operating mode of each thermostats 2 by keeping into account such an incorrect operating mode or ambient event.

In case of an ambient event, such a discrepancy "C" could be detected, as an example, by a specific dedicated sensor (for example a window sensor) or by one or more other sensors from which it could be derived such an information (for example a microphone, barometer, thermostat, ...).

So, for example, if the controller 5 identify that the discrepancy "C" is due to an open window (because there is a sensor of the window revealing that there is an opening or because this information about the open window is derivable from any other kind of sensor detecting that the window is open), no switching of the operating mode will be performed.

Therefore, if not all the thermostats 2 of the pre-established number sends an ambient temperature "Ta" that would lead to identify the discrepancy "C" or if the threshold is not exceeded, it would mean that the "discrepancy "C" does not derive from an incorrect operating mode. Therefore, the controller 5 will create a discrepancy history in order to quickly identifying if discrepancy derives from an incorrect operating mode or if it derives from an ambient event.

The server 5a could be a physical server (integrated in the control system 1) or an online one (like an app or cloud service).

The present invention also relates to a control method for a plurality of thermostats 2 descending directly from the control system above described which is here below completely called back.

The method comprises the steps of defining a desired temperature "Ta", activating a conditioning system 3 in light of the desired temperature "Td" and measuring an ambient temperature "Ta".

The control method also comprises the step of confronting the ambient temperature "Ta" during the functioning of the conditioning system 3 with the desired temperature "Td".

The method also comprises the step of identifying a discrepancy "C" between the ambient temperature "Ta" and the desired temperature "Td" during the functioning of the conditioning system 3 and detecting a season changeover of a mode switcher 4 in light of the discrepancy "C".

At this point the method switch an operating mode of each thermostat 2 in order to match the season changeover of the mode switcher 4.

Preferably, the control method comprises the step of identifying the discrepancy "C" is realised by verifying that the discrepancy "C" is present in a pre-established number of thermostats 2.

Preferably, the step of identifying the discrepancy "C" is realised by identifying that the ambient temperature "Ta" is higher or lower than the desired temperature "Td" with a pre-established threshold.

Preferably, the control method is executed in a control system 1 as described previously.

Preferably, the control method is executed with the controller 5 of the control system 1.

The present invention also relates to a computer program comprising instructions which, when the program is executed by a controller of the control system according to present invention, cause the controller to carry out the steps of the control method as described previously.

The computer program is installed in the controller 5 of the control system 1. In other words, the computer program comprises instructions to operate the control system 1.

The present invention overcomes the problems emerged in the state of the art.

Advantageously, the present invention will provide an automatic detection of the season changeover with no need of manual selection of the operating mode of the thermostats 2.

Furthermore, the present invention will have no need for a dedicated temperature sensor on the pipes.

Furthermore, the present invention will allow to obtain a easier and faster retrofit.

Advantageously, the present invention will allow for an automatic set of a new operating mode for each thermostat.

Furthermore, with the present invention, all room are updated together simultaneously.

## Claims

1. Control system (1) for a plurality of thermostats (2) comprising:
- a plurality of thermostats (2) in use connected with a conditioning system (3), each thermostat (2) being set to an operating mode, selected between a cooling mode (2a) and a heating mode (2b), and being configured to measure an ambient temperature (Ta) and to set a desired temperature (Td);
- a mode switcher (4), in use connected to said conditioning system (3), configured to set a season changeover for the conditioning system (3), said season changeover being selected between a cooling mode (2a) and a heating mode (2b) for the conditioning system (3);
- a controller (5) connected to said plurality of thermostats (2) and being configured to:
obtain said ambient temperature (Ta) and said desired temperature (Td) from at least one thermostat (2);
identifying a discrepancy (C) between the ambient temperature (Ta) and the desired temperature (Td) during the functioning of said conditioning system (3);
detecting the season changeover of said mode switcher (4) in light of said discrepancy (C);
switching the operating mode of each thermostats (2) in order to match the season changeover of said mode switcher (4).

2. Control system (1) according to claim 1, wherein said controller (5) is configured to verifying that said discrepancy (C) is present in a pre-established number of thermostats (2).

3. Control system (1) according to claim 1 or 2, wherein said controller (5) is configured to identifying said discrepancy (C) if the ambient temperature (Ta) is higher or lower than said desired temperature (Td) with a pre-established threshold.

4. Control system (1) according to claim 3, wherein said controller (5) is configured to identifying said discrepancy (C) in the following way:
- calculate a first difference, in absolute value, between the desired temperature (Td) and the ambient temperature (Ta1) measured in a first phase,
- calculate a second difference, in absolute value, between said desired temperature (Td) and an ambient temperature (Ta2) measured in a second phase subsequent to the first phase and during the functioning of said conditioning system (3);
- if the second difference is major than the first difference, a discrepancy (C) is identified;
- if the second difference is minor than the first difference, there is not a discrepancy (C).

5. Control system (1) according to any of the preceding claims, wherein the controller (5) is further configured to verify if such a discrepancy (C) derives from an incorrect operating mode or from an ambient event, and for switching the operating mode of each thermostats (2) in function of such an incorrect operating mode or ambient event.

6. Control system (1) according to any of the preceding claims, comprising a server (5a) configured to define a discrepancy (C) history, said controller (5) being connected to said server (5a) in order to identify if a discrepancy (C) derives from an incorrect operating mode or from a ambient event.

7. Control method for a plurality of thermostats (2) comprising the steps of:
- define a desired temperature (Td);
- activating a conditioning system (3) in light of said desired temperature (Td);
- measure an ambient temperature (Ta);
- confront said ambient temperature (Ta) with said desired temperature (Td);
- identifying a discrepancy (C) between the ambient temperature (Ta) and the desired temperature (Td) during the functioning of said conditioning system (3);
- detecting a season changeover of a mode switcher (4) in light of said discrepancy (C);
- switching an operating mode of each thermostats (2) in order to match the season changeover of said mode switcher (4).

8. Control method according to claim 7, wherein said step of identifying said discrepancy (C) is realised by verifying that said discrepancy (C) is present in a pre-established number of thermostats (2).

9. Control method according to claim 7 or 8, wherein said step of identifying said discrepancy (C) is realised by identifying that the ambient temperature (Ta) is higher or lower than said desired temperature (Td) with a pre-established threshold.

10. Control method according to claims from 7 to 9, wherein said step of identifying said discrepancy (C) is performed by the following sub steps:
- calculating a first difference, in absolute value, between the desired temperature (Td) and the ambient temperature (Ta1) measured in a first phase,
- calculating a second difference, in absolute value, between said desired temperature (Td) and an ambient temperature (Ta2) measured in a second phase subsequent to the first phase and during the functioning of said conditioning system (3);
- if the second difference is major than the first difference, a discrepancy (C) is identified;
- if the second difference is minor than the first difference, there is not a discrepancy (C).

11. A computer program comprising instructions which, when the program is executed by a controller (5) of the control system of claim 1 to 6, cause the controller (5) to carry out the steps of the control method of one or more of claims 7 to 10.

## Patentansprüche

1. Steuerungssystem (1) für eine Vielzahl von Thermostaten (2), umfassend:
- eine Vielzahl von Thermostaten (2), die im Gebrauch mit einem Konditionierungssystem (3) verbunden sind, wobei ein jeder Thermostat (2) auf einen Betriebsmodus eingestellt ist, der zwischen einem Kühlmodus (2a) und einem Heizmodus (2b) ausgewählt ist, und ausgelegt ist, um eine Umgebungstemperatur (Ta) zu messen und eine gewünschte Temperatur (Td) einzustellen;
- einen Modusumschalter (4), der im Gebrauch mit dem Konditionierungssystem (3) verbunden ist und ausgelegt ist, um einen Saisonwechsel für das Konditionierungssystem (3) einzustellen, wobei der Saisonwechsel zwischen einem Kühlmodus (2a) und einem Heizmodus (2b) für das Konditionierungssystem (3) ausgewählt wird;
- eine Steuerung (5), die mit der Vielzahl von Thermostaten (2) verbunden ist und zu Folgendem ausgelegt ist:
Erhalten der Umgebungstemperatur (Ta) und der gewünschten Temperatur (Td) von mindestens einem Thermostat (2);
Identifizieren einer Diskrepanz (C) zwischen der Umgebungstemperatur (Ta) und der gewünschten Temperatur (Td) während des Betriebs des Konditionierungssystems (3) ;
Detektieren des Saisonwechsels des Modusumschalters (4) im Lichte der Diskrepanz (C);
Umschalten des Betriebsmodus eines jeden Thermostats (2), um mit dem Saisonwechsel des Modusumschalters (4) übereinzustimmen.

2. Steuerungssystem (1) nach Anspruch 1, wobei die Steuerung (5) ausgelegt ist, um zu überprüfen, dass die Diskrepanz (C) in einer vorher festgelegten Anzahl von Thermostaten (2) vorhanden ist.

3. Steuerungssystem (1) nach Anspruch 1 oder 2, wobei die Steuerung (5) dazu ausgelegt ist, die Diskrepanz (C) zu identifizieren, wenn die Umgebungstemperatur (Ta) höher oder niedriger als die gewünschte Temperatur (Td) mit einem vorher festgelegten Schwellenwert ist.

4. Steuerungssystem (1) nach Anspruch 3, wobei die Steuerung (5) dazu ausgelegt ist, die Diskrepanz (C) auf folgende Weise zu identifizieren:
- Berechnen einer ersten Differenz, in Absolutwert, zwischen der gewünschten Temperatur (Td) und der Umgebungstemperatur (Ta1), die in einer ersten Phase gemessen wird,
- Berechnen einer zweiten Differenz, in Absolutwert, zwischen der gewünschten Temperatur (Td) und einer Umgebungstemperatur (Ta2), die in einer zweiten Phase im Anschluss an die erste Phase und während des Betriebs des Konditionierungssystems (3) gemessen wird;
- wenn die zweite Differenz größer als die erste Differenz ist, wird eine Diskrepanz (C) identifiziert;
- wenn die zweite Differenz geringer ist als die erste Differenz, besteht keine Diskrepanz (C).

5. Steuerungssystem (1) nach einem der vorhergehenden Ansprüche, wobei die Steuerung (5) ferner ausgelegt ist, um zu überprüfen, ob eine solche Diskrepanz (C) von einem falschen Betriebsmodus oder von einem Umgebungsereignis herrührt, und um den Betriebsmodus eines jeden Thermostats (2) in Abhängigkeit von einem solchen falschen Betriebsmodus oder Umgebungsereignis umzuschalten.

6. Steuerungssystem (1) nach einem der vorhergehenden Ansprüche, umfassend einen Server (5a), der ausgelegt ist, um eine Diskrepanz (C) -Historie zu definieren, wobei die Steuerung (5) mit dem Server (5a) verbunden ist, um zu identifizieren, ob eine Diskrepanz (C) von einem falschen Betriebsmodus oder von einem Umgebungsereignis herrührt.

7. Steuerungsverfahren für eine Vielzahl von Thermostaten (2), umfassend die folgenden Schritte:
- Definieren einer gewünschten Temperatur (Td);
- Aktivieren eines Konditionierungssystems (3) im Lichte der gewünschten Temperatur (Td);
- Messen einer Umgebungstemperatur (Ta);
- Konfrontieren der Umgebungstemperatur (Ta) mit der gewünschten Temperatur (Td);
- Identifizieren einer Diskrepanz (C) zwischen der Umgebungstemperatur (Ta) und der gewünschten Temperatur (Td) während des Betriebs des Konditionierungssystems (3);
- Detektieren eines Saisonwechsels eines Modusumschalters (4) im Lichte der Diskrepanz (C);
- Umschalten eines Betriebsmodus eines jeden Thermostats (2), um mit dem Saisonwechsel des Modusumschalters (4) übereinzustimmen.

8. Steuerungsverfahren nach Anspruch 7, wobei der Schritt zum Identifizieren der Diskrepanz (C) durch Überprüfen, dass die Diskrepanz (C) in einer vorher festgelegten Anzahl von Thermostaten (2) vorhanden ist, realisiert wird.

9. Steuerungsverfahren nach Anspruch 7 oder 8, wobei der Schritt zum Identifizieren der Diskrepanz (C) durch Identifizieren, dass die Umgebungstemperatur (Ta) höher oder niedriger als die gewünschte Temperatur (Td) mit einem vorher festgelegten Schwellenwert ist, realisiert wird.

10. Steuerungsverfahren nach den Ansprüchen 7 bis 9, wobei der Schritt zum Identifizieren der Diskrepanz (C) durch die folgenden Teilschritte durchgeführt wird:
- Berechnen einer ersten Differenz, in Absolutwert, zwischen der gewünschten Temperatur (Td) und der Umgebungstemperatur (Ta1), die in einer ersten Phase gemessen wird,
- Berechnen einer zweiten Differenz, in Absolutwert, zwischen der gewünschten Temperatur (Td) und einer Umgebungstemperatur (Ta2), die in einer zweiten Phase im Anschluss an die erste Phase und während des Betriebs des Konditionierungssystems (3) gemessen wird;
- wenn die zweite Differenz größer als die erste Differenz ist, wird eine Diskrepanz (C) identifiziert;
- wenn die zweite Differenz geringer ist als die erste Differenz, besteht keine Diskrepanz (C).

11. Computerprogramm, das Anweisungen umfasst, die, wenn das Programm von einer Steuerung (5) des Steuerungssystems nach Anspruch 1 bis 6 ausgeführt wird, die Steuerung (5) veranlassen, die Schritte des Steuerungsverfahrens nach einem oder mehreren der Ansprüche 7 bis 10 auszuführen.

## Revendications

1. Système de commande (1) pour une pluralité de thermostats (2), comprenant :
- une pluralité de thermostats (2) reliés, lors de l'utilisation, à un système de climatisation (3), chaque thermostat (2) étant réglé sur un mode de fonctionnement, choisi entre un mode de refroidissement (2a) et un mode de chauffage (2b), et étant configuré pour mesurer une température ambiante (Ta) et pour régler une température désirée (Td) ;
- un commutateur de mode (4) relié, lors de l'utilisation, audit système de climatisation (3), configuré pour régler un changement de saison pour le système de climatisation (3), ledit changement de saison étant choisi entre un mode de refroidissement (2a) et un mode de chauffage (2b) pour le système de climatisation (3) ;
- un dispositif de commande (5) relié à ladite pluralité de thermostats (2) et étant configuré pour :
obtenir ladite température ambiante (Ta) et ladite température désirée (Td) à partir d'au moins un thermostat (2) ;
identifier une divergence (C) entre la température ambiante (Ta) et la température désirée (Td) pendant le fonctionnement dudit système de climatisation (3) ;
détecter le changement de saison dudit commutateur de mode (4) en fonction de ladite divergence (C) ;
commuter le mode de fonctionnement de chaque thermostat (2) afin d'adapter le changement de saison dudit commutateur de mode (4).

2. Système de commande (1) selon la revendication 1, dans lequel ledit dispositif de commande (5) est configuré pour vérifier que ladite divergence (C) est présente dans un nombre prédéfini de thermostats (2).

3. Système de commande (1) selon la revendication 1 ou 2, dans lequel ledit dispositif de commande (5) est configuré pour identifier ladite divergence (C) si la température ambiante (Ta) est supérieure ou inférieure à ladite température désirée (Td) par rapport à un seuil prédéfini.

4. Système de commande (1) selon la revendication 3, dans lequel ledit dispositif de commande (5) est configuré pour identifier ladite divergence (C) de la manière suivante :
- calculer une première différence, en valeur absolue, entre la température désirée (Td) et la température ambiante (Ta1) mesurée lors d'une première phase,
- calculer une seconde différence, en valeur absolue, entre ladite température désirée (Td) et une température ambiante (Ta2) mesurée lors d'une seconde phase postérieure à la première phase et pendant le fonctionnement dudit système de climatisation (3) ;
- si la seconde différence est supérieure à la première différence, une divergence (C) est identifiée ;
- si la seconde différence est inférieure à la première différence, il n'y a pas de divergence (C).

5. Système de commande (1) selon l'une quelconque des revendications précédentes, dans lequel le dispositif de commande (5) est en outre configuré pour vérifier si une telle divergence (C) résulte d'un mode de fonctionnement incorrect ou d'un événement ambiant, et pour commuter le mode de fonctionnement de chaque thermostat (2) en fonction d'un tel mode de fonctionnement incorrect ou d'un tel événement ambiant.

6. Système de commande (1) selon l'une quelconque des revendications précédentes, comprenant un serveur (5a) configuré pour définir un historique des divergences (C), ledit dispositif de commande (5) étant relié audit serveur (5a) afin d'identifier si une divergence (C) résulte d'un mode de fonctionnement incorrect ou d'un événement ambiant.

7. Procédé de commande d'une pluralité de thermostats (2), comprenant les étapes de :
- définir une température désirée (Td) ;
- activer un système de climatisation (3) en fonction de ladite température désirée (Td) ;
- mesurer une température ambiante (Ta) ;
- comparer ladite température ambiante (Ta) à ladite température désirée (Td) ;
- identifier une divergence (C) entre la température ambiante (Ta) et la température désirée (Td) pendant le fonctionnement dudit système de climatisation (3) ;
- détecter un changement de saison d'un commutateur de mode (4) en fonction de ladite divergence (C) ;
- commuter un mode de fonctionnement de chaque thermostat (2) afin d'adapter le changement de saison dudit commutateur de mode (4).

8. Procédé de commande selon la revendication 7, dans lequel ladite étape consistant à identifier ladite divergence (C) est réalisée en vérifiant que ladite divergence (C) est présente dans un nombre prédéfini de thermostats (2).

9. Procédé de commande selon la revendication 7 ou 8, dans lequel ladite étape consistant à identifier ladite divergence (C) est réalisée en déterminant si la température ambiante (Ta) est supérieure ou inférieure à ladite température désirée (Td) par rapport à un seuil prédéfini.

10. Procédé de commande selon les revendications 7 à 9, dans lequel ladite étape consistant à identifier ladite divergence (C) est exécutée par les sous-étapes suivantes :
- calculer une première différence, en valeur absolue, entre la température désirée (Td) et la température ambiante (Ta1) mesurée lors d'une première phase,
- calculer une seconde différence, en valeur absolue, entre ladite température désirée (Td) et une température ambiante (Ta2) mesurée lors d'une seconde phase postérieure à la première phase et pendant le fonctionnement dudit système de climatisation (3) ;
- si la seconde différence est supérieure à la première différence, une divergence (C) est identifiée ;
- si la seconde différence est inférieure à la première différence, il n'y a pas de divergence (C).

11. Programme informatique comprenant des instructions qui, lorsque le programme est exécuté par un dispositif de commande (5) du système de commande selon les revendications 1 à 6, amènent le dispositif de commande (5) à mettre en œuvre les étapes du procédé de commande selon l'une ou plusieurs des revendications 7 à 10.
